# EUROPEAN PATENT APPLICATION

(11) **EP 3 666 833 A1**
(43) Date of publication of application: **17.06.2020**
(21) Application number: 19214747.8
(22) Date of filing: 10.12.2019
(51) Int. Cl.: C09D 11/101, C09D 11/40, C09D 11/322, C09D 11/38, B41J 27/00

(54) **IMAGE FORMING METHOD**

(30) Priority: 12.12.2018 JP 2018232318
(71) Applicant: KONICA MINOLTA, INC., Tokyo 100-7015 (JP)
(72) Inventor: Ikeda, Masashi, Tokyo, 100-7015 (JP); Yamaguchi, Go, Tokyo, 100-7015 (JP)
(74) Representative: Hoffmann Eitle

(57) **Abstract**

The image forming method of the present invention includes first formation of an image, the formation including attaching a white ink containing an actinic radiation polymerizable compound and a white pigment through an inkjet head to a surface of a recording medium, first light exposure including the white ink attached to the surface of the recording medium with actinic radiation to cure or temporarily cure the white ink, second formation of an image, the formation including attaching an ink containing an actinic radiation polymerizable compound and a gelling agent through an inkjet head to a surface of a white cured film obtained by curing of the white ink, and second light exposure including irradiating the actinic radiation curable ink attached to the surface of the white cured film with actinic radiation to cure the ink other than the white ink.

## Description

### 1. Field of the Invention

The present invention relates to an image forming method.

### 2. Description of Related Art

Inkjet image forming methods can simply and inexpensively form an image, and thus are used in various printing fields. There is known, as one inkjet ink, an ink (hereinafter, also simply referred to as an "actinic radiation curable ink") containing an actinic radiation polymerizable compound that is to be cured by irradiation with actinic radiation and a polymerization initiator. A droplet of such an actinic radiation curable ink is attached to a surface of a recording medium and the droplet attached is irradiated with actinic radiation, thereby forming a cured film obtained by curing the ink, on the surface of a recording medium. Such a cured film can be sequentially formed to result in formation of a desired image. An image forming method with such an actinic radiation curable ink has attracted attention because the method can form an image having high adhesiveness regardless of water absorption properties of a recording medium.

There is known a technique with respect to the actinic radiation curable ink, in which wax or a gelling agent is contained in the actinic radiation curable ink for the purpose of an enhancement in pinning properties of the actinic radiation curable ink attached to a recording medium. In such a technique, the wax or the gelling agent can allow for sol-gel phase transition due to the variation in temperature and thus the ink can undergo gelation in attachment to a surface of the recording medium to thereby enhance pinning properties of the ink and prevent dots from being excessively spread.

There is also known an image forming method including creating a desired aesthetic appearance by combination use of the actinic radiation curable color ink with a white ink. The white ink can be here an actinic radiation curable ink that can undergo sol-gel phase transition due to the variation in temperature, thereby allowing formation of an image to be performed by a simpler method. The white ink can also be used for overcoating or undercoating in formation of an image by use of a color ink, thereby forming a background color.

For example, one image forming method by combination use of a color ink with a white ink is an image forming method including first ejecting an actinic radiation curable white ink through a nozzle of an inkjet head to attach the ink to a surface of a recording medium, then attaching an actinic radiation curable color ink to a surface of the actinic radiation curable white ink attached to the surface of the recording medium, and irradiating the actinic radiation curable white ink and the actinic radiation curable color ink that are uncured and superimposed, with actinic radiation to thereby cure the inks by collective light exposure.

Such formation of an image, however, performed by simultaneous curing an actinic radiation curable color ink and an actinic radiation curable white ink by collective light exposure may cause particularly a white cured film obtained by curing of an actinic radiation curable white ink containing wax to be easily brittle, resulting in folding crack of an image formed.

There is then proposed an image forming method by multi-stage light exposure, the method including first ejecting an actinic radiation curable white ink through a nozzle of an inkjet head to attach the ink to a surface of a recording medium, thereafter irradiating the resultant with actinic radiation to cure the actinic radiation curable white ink, thereby forming a white cured film, then ejecting an actinic radiation curable color ink through a nozzle of an inkjet head onto the white cured film to attach the ink to the white cured film, and thereafter irradiating the resultant with actinic radiation to cure the actinic radiation curable color ink.

Such formation of an image, however, performed by multi-stage light exposure may cause an actinic radiation curable color ink to be repelled on a surface of a white cured film obtained by curing of an actinic radiation curable white ink and/or cause peeling to occur at the interface between the white cured film and a cured film of the color ink, obtained by curing on the white cured film, thereby not enabling any image having a desired aesthetic appearance to be obtained in some cases. There is then a need for an image forming method that provides a desired aesthetic appearance even in the case of multicoating with an actinic radiation curable white ink and a color ink.

For example, Japanese Patent Application Laid-Open No. 2011-218794 discloses a recording method including ejecting a first ink composition containing a white colorant onto a recording medium, curing the first ink composition ejected, at a curing rate in a predetermined range (70 to 95%), and overcoating a layer cured, with a second ink containing any colorant other than the white colorant, for further curing. The recording method is considered to enable the occurrence of bleeding and/or repelling in the layer cured to be suppressed in performing of overcoat printing.

The present inventors, however, have studied, and thus have found that curing which is made so as to allow the curing rate of the first ink composition containing a white colorant, described in Japanese Patent Application Laid-Open No. 2011-218794, to be 70 to 95% causes generation of odor due to an uncured actinic radiation polymerizable compound remaining in the first ink composition. It has also been found that curing which is made so as to allow the curing rate of the first ink composition to be 95% or more for a reduction in such odor causes the second ink composition to be repelled on a surface of the first ink composition, thereby not enabling adhesiveness of an image to be enhanced.

### SUMMARY OF THE INVENTION

The present invention has been made in view of such circumstances, and an object thereof is to provide an image forming method that enables odor due to an unreacted actinic radiation polymerizable compound to be reduced and enables an image excellent in adhesiveness to be formed in formation of an image by overcoat printing for attachment of other actinic radiation curable ink to a white actinic radiation curable ink.

To achieve at least one of the abovementioned objects, according to an aspect of the present invention, an image forming method reflecting one aspect of the present invention comprises: first formation of an image, the formation comprising ejecting an actinic radiation curable white inkjet ink comprising an actinic radiation polymerizable compound and a white pigment through a nozzle of an inkjet head to attach the ink to a surface of a recording medium; first light exposure comprising irradiating the actinic radiation curable white inkjet ink attached to the surface of the recording medium with actinic radiation to cure or temporarily cure the actinic radiation curable white inkjet ink; second formation of an image, the formation comprising ejecting an actinic radiation curable inkjet ink comprising an actinic radiation polymerizable compound and a gelling agent through a nozzle of an inkjet head to attach the ink to a surface of a white cured film obtained by curing of the actinic radiation curable white inkjet ink; and second light exposure comprising irradiating the actinic radiation curable inkjet ink attached to the surface of the white cured film with actinic radiation to cure the actinic radiation curable inkjet ink.

### BRIEF DESCRIPTION OF DRAWING

The advantages and features provided by one or more embodiments of the invention will become more fully understood from the detailed description given hereinbelow and the appended drawing which are given by way of illustration only, and thus are not intended as a definition of the limits of the present invention:

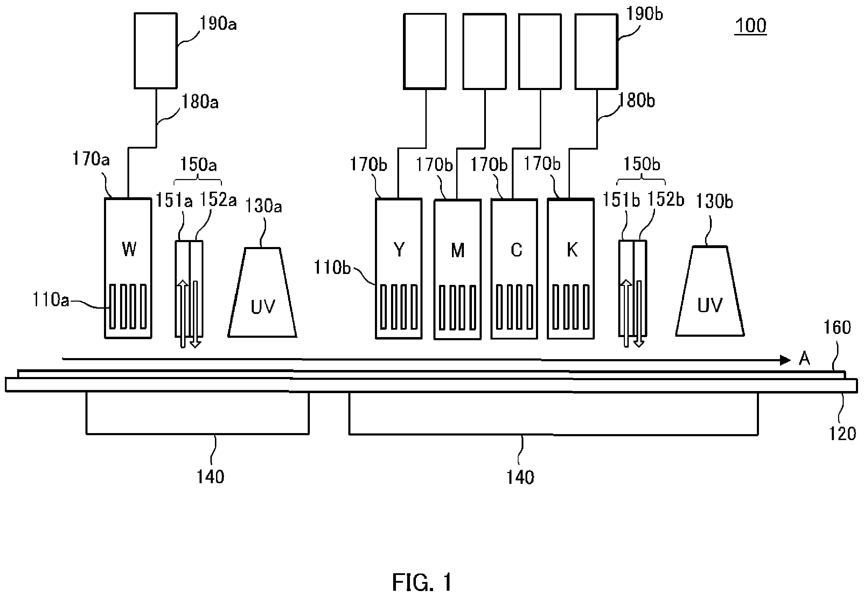

FIG. 1 illustrates a schematic view illustrating an exemplary configuration of an image forming apparatus according to an embodiment of the present invention.

### DESCRIPTION OF THE PREFERRED EMBODIMENTS

Hereinafter, one or more embodiments of the present invention will be described with reference to the drawing. However, the scope of the invention is not limited to the disclosed embodiments.

### [Image forming method]

The image forming method according to the present invention is an image forming method by two-stage light exposure, the method including (1) first formation of an image, the formation including ejecting an actinic radiation curable white ink containing an actinic radiation polymerizable compound and a white pigment through a nozzle of an inkjet head to attach the ink to a surface of a recording medium, (2) first light exposure including irradiating the actinic radiation curable white ink attached to the surface of the recording medium with actinic radiation to cure the actinic radiation curable white ink, (3) second formation of an image, the formation including ejecting an actinic radiation curable ink containing an actinic radiation polymerizable compound and a gelling agent through a nozzle of an inkjet head to attach the ink to a surface of a white cured film obtained by curing of the actinic radiation curable white ink, and (4) second light exposure including irradiating the actinic radiation curable ink attached to the surface of the white cured film with actinic radiation to cure the actinic radiation curable ink. Hereinafter, such each step will be described.

### [First formation of image]

The first formation of an image includes ejecting an actinic radiation curable white inkjet ink containing an actinic radiation polymerizable compound and a white pigment through a nozzle of an inkjet head to attach the ink onto a recording medium, thereby forming a white image.

### [White ink]

The actinic radiation curable white ink for use in the first formation of an image is an actinic radiation curable white ink (hereinafter, also simply referred to as "white ink") including a pigment, an actinic radiation polymerizable compound, a polymerization initiator, a surfactant and a polymerization inhibitor. Hereinafter, the white ink in the present invention will be described through the detailed description of each component.

### (Pigment)

The white ink in the present invention includes a white pigment. Examples of the white pigment include titanium oxide. The white ink in the present invention preferably includes the titanium oxide at a content of 5wt% or more and 30wt% or less, more preferably at a content of 8wt% or more and 20wt% or less based on the total mass of the white ink.

Examples of the crystalline form of the titanium oxide that can be used as the white pigment include rutile, anatase, and brookite types. An anatase type is preferable from the viewpoints of a small specific gravity and an easy reduction in particle size, and a rutile type is preferable from the viewpoints of a high refractive index and high hiding properties in the visible light region. One type of such titanium oxide in any crystalline form described above or a combination of such titanium oxides different in crystalline form may be used in the white ink in the present invention.

The weight average particle size of the titanium oxide is preferably 50 nm or more and 500 nm or less, more preferably 100 nm or more and 300 nm or less. The weight average particle size of the titanium oxide is 50 nm or more, thereby allowing an ink having sufficient hiding properties to be obtained. On the other hand, the weight average particle size of the titanium oxide is 500 nm or less, thereby enabling the titanium oxide to be stably dispersed, resulting in enhancements in storage ability and injection stability of the ink.

Any commercially available titanium oxide may also be used in the present invention. Examples of such any commercially available titanium oxide that can be used in the present invention include CR-EL, CR-50, CR-80, CR-90, R-780 and R-930 (all manufactured by Ishihara Sangyo Kaisha, Ltd.), TCR-52, R-310 and R-32 (all manufactured by Sakai Chemical Industry Co., Ltd.), and KR-310, KR-380 and KR-380N (all manufactured by Titan Kogyo, Ltd.).

### (Actinic radiation polymerizable compound)

The white ink includes an actinic radiation polymerizable compound. The actinic radiation polymerizable compound is a compound that is to be crosslinked or polymerized by irradiation with actinic radiation. Examples of the actinic radiation include electron beam, ultraviolet light, α-ray, γ-ray, and X-ray. In particular, the actinic radiation is preferably ultraviolet light or electron beam.

The content of the actinic radiation polymerizable compound is, for example, preferably 1.0wt% or more and 97wt% or less, preferably 30wt% or more and 90wt% or less based on the total mass of the white ink.

Examples of the actinic radiation polymerizable compound that is to be crosslinked or polymerized by irradiation with actinic radiation include a radical polymerizable compound, a cationic polymerizable compound, or a mixture thereof. In particular, the actinic radiation polymerizable compound is preferably a radical polymerizable compound. The radical polymerizable compound may be included singly or in combinations of two or more kinds thereof, in the white ink. The radical polymerizable compound may be here any of a monomer, a polymerizable oligomer, a prepolymer and a mixture thereof.

The radical polymerizable compound is here a compound having an ethylenically unsaturated double bond group in its molecule. The radical polymerizable compound can be a monofunctional monomer or a polyfunctional monomer. Examples of the radical polymerizable compound include (meth)acrylate being an unsaturated carboxylate compound. In the present invention, the "(meth)acrylate" means acrylate or methacrylate, the "(meth)acryloyl group" means an acryloyl group or a methacryloyl group, and the "(meth)acrylic" means acrylic or methacrylic.

Examples of monofunctional (meth)acrylate include isoamyl (meth)acrylate, stearyl (meth)acrylate, lauryl (meth)acrylate, octyl (meth)acrylate, decyl (meth)acrylate, isomyristyl (meth)acrylate, isostearyl (meth)acrylate, 2-ethylhexyl-diglycol (meth)acrylate, 2-hydroxybutyl (meth)acrylate, 2-(meth)acryloyloxyethylhexahydrophthalic acid, butoxyethyl (meth)acrylate, ethoxydiethylene glycol (meth)acrylate, methoxydiethylene glycol (meth)acrylate, methoxy polyethylene glycol (meth)acrylate, methoxypropylene glycol (meth)acrylate, phenoxyethyl (meth)acrylate, tetrahydrofurfuryl (meth)acrylate, isobornyl (meth)acrylate, 2-hydroxyethyl (meth)acrylate, 2-hydroxypropyl (meth)acrylate, 2-hydroxy-3-phenoxypropyl (meth)acrylate, 2-(meth)acryloyloxyethylsuccinic acid, 2-(meth)acryloyloxyethylphthalic acid, 2-(meth)acryloyloxyethyl-2-hydroxyethyl-phthalic acid, and t-butylcyclohexyl (meth)acrylate.

Examples of polyfunctional (meth)acrylate include difunctional (meth)acrylates such as triethylene glycol di(meth)acrylate, tetraethylene glycol di(meth)acrylate, polyethylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, dimethylol-tricyclodecane di(meth)acrylate, PO adduct di(meth)acrylate of bisphenol A, hydroxypivalic acid neopentyl glycol di(meth)acrylate, polytetramethylene glycol di(meth)acrylate, polyethylene glycol diacrylate and tripropylene glycol diacrylate; trifunctional (meth)acrylates such as trimethylolpropane tri(meth)acrylate and pentaerythritol tri(meth)acrylate; tri- or higher functional (meth)acrylates such as pentaerythritol tetra(meth)acrylate, dipentaerythritol hexa(meth)acrylate, ditrimethylolpropane tetra(meth)acrylate, glycerin propoxy tri(meth)acrylate and pentaerythritol ethoxy tetra(meth)acrylate; and oligomers having a (meth)acryloyl group, including polyester acrylate oligomers, and modified products thereof. Examples of such a modified product include ethylene oxide-modified (EO-modified) acrylate into which an ethylene oxide group is introduced, and propylene oxide-modified (PO-modified) acrylate into which propylene oxide is introduced.

The radical polymerizable compound for use in the present invention is preferably at least partially an ethylene oxide-modified (meth)acrylate compound. The reason is because an ethylene oxide-modified (meth)acrylate compound is high in photosensitivity to allow a card house structure to be easily formed in gelation of the ink at a low temperature. In addition, an ethylene oxide-modified (meth)acrylate compound is easily dissolved in other ink component and less cured and shrunk at a high temperature, thereby hardly causing curling of a print to occur.

The cationic polymerizable compound is a compound having a cationic polymerizable group. Examples of the cationic polymerizable compound include an epoxy compound, a vinyl ether compound, and an oxetane compound.

Examples of the epoxy compound include alicyclic epoxy resins such as 3,4-epoxycyclohexylmethyl-3 ',4'-epoxycyclohexane carboxylate, bis(3,4-epoxycyclohexylmethyl)adipate, vinylcyclohexene monoepoxide, ε-caprolactone-modified 3,4-epoxycyclohexylmethyl 3',4'-epoxycyclohexane carboxylate, 1-methyl-4-(2-methyloxiranyl)-7-oxabicyclo[4,1,0]heptane, 2-(3,4-epoxycyclohexyl-5,5-spiro-3,4-epoxy)cyclohexanone-meta-dioxane and bis(2,3-epoxycyclopentyl)ether, aliphatic epoxy compounds including 1,4-butanediol diglycidyl ether, 1,6-hexanediol diglycidyl ether, glycerin triglycidyl ether, trimethylolpropane triglycidyl ether, polyethylene glycol diglycidyl ether, propylene glycol diglycidyl ether, and polyether polyol polyglycidyl ethers obtained by adding one or more alkylene oxides (ethylene oxide, propylene oxide, and the like) to aliphatic polyhydric alcohols such as ethylene glycol, propylene glycol and glycerin, and aromatic epoxy compounds including di- or polyglycidyl ether of bisphenol A or an alkylene oxide adduct thereof, di- or polyglycidyl ether of hydrogenated bisphenol A or an alkylene oxide adduct thereof, and a novolac type epoxy resin.

Examples of the vinyl ether compound include monovinyl ether compounds including ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexanedimethanol monovinyl ether, n-propyl vinyl ether, isopropyl vinyl ether, isopropenyl ether-o-propylene carbonate, dodecyl vinyl ether, diethylene glycol monovinyl ether and octadecyl vinyl ether, and di- or trivinyl ether compounds including ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexanedimethanol divinyl ether and trimethylolpropane trivinyl ether.

Examples of the oxetane compound include 3-hydroxymethyl-3-methyloxetane, 3 -hydroxymethyl-3 -ethyloxetane, 3 -hydroxymethyl-3 -propyloxetane, 3 -hydroxymethyl-3 -n-butyloxetane, 3 -hydroxymethyl-3 -phenyloxetane, 3-hydroxymethyl-3-benzyloxetane, 3 -hydroxyethyl-3 -methyloxetane, 3 -hydroxyethyl-3 -ethyloxetane, 3 -hydroxyethyl-3 -propyloxetane, 3 -hydroxyethyl-3 -phenyloxetane, 3 -hydroxypropyl-3 -methyloxetane, 3 -hydroxypropyl-3 -ethyloxetane, 3 -hydroxypropyl-3 -propyloxetane, 3 -hydroxypropyl-3 -phenyloxetane, 3 -hydroxybutyl-3 -methyloxetane, 1,4-bis{[(3-ethyl-3-oxetanyl)methoxy]methyl}benzene, 3 -ethyl-3 -(2-ethylhexyloxymethyl)oxetane, and di[1-ethyl(3-oxetanyl)]methyl ether.

The actinic radiation polymerizable compound for use in the present invention includes a polyfunctional actinic radiation polymerizable compound, and may include a monofunctional actinic radiation polymerizable compound. Herein, the content of the monofunctional actinic radiation polymerizable compound is preferably 0wt% or more and 20wt% or less, more preferably 0wt% or more and 10wt% or less based on the total mass of the white ink. The content of the monofunctional actinic radiation polymerizable compound is 20wt% or less based on the total mass of the white ink, thereby allowing the polyfunctional actinic radiation polymerizable compound to be polymerized and crosslinked to generate a denser network hydrocarbon chain, and thus an unreacted actinic radiation polymerizable compound and the like can pass through the interspace of the network hydrocarbon chain to thereby allow odor generated from a cured film to be further reduced.

### (Polymerization initiator)

The white ink may further include, if necessary, a polymerization initiator. The polymerization initiator is not particularly limited as long as the initiator can initiate polymerization of the actinic radiation polymerizable compound. For example, when the white ink includes the radical polymerizable compound, the polymerization initiator can be a photoradical initiator, and when the white ink includes the cationic polymerizable compound, the polymerization initiator can be a photocationic initiator (photo-acid generator). When the white ink can be sufficiently cured even in the absence of the polymerization initiator, for example, when the white ink is cured by irradiation with electron beam, no polymerization initiator is needed.

A radical polymerization initiator encompasses an intramolecular bond cleavage type radical polymerization initiator and an intramolecular hydrogen abstraction type radical polymerization initiator.

Examples of the intramolecular bond cleavage type radical polymerization initiator include acetophenone-based initiators including diethoxyacetophenone, 2-hydroxy-2-methyl-1-phenylpropan-1-one, benzyl dimethyl ketal, 1-(4-isopropylphenyl)-2-hydroxy-2-methylpropan-1-one, 4-(2-hydroxyethoxy)phenyl-(2-hydroxy-2-propyl)ketone, 1-hydroxycyclohexyl-phenylketone, 2-methyl-2-morpholino(4-methylthiophenyl)propan-1-one and 2-benzyl-2-dimethylamino-1-(4-morpholinophenyl)-butanone, benzoins including benzoin, benzoin methyl ether and benzoin isopropyl ether, acylphosphine oxide-based initiators including 2,4,6-trimethylbenzoyldiphenylphosphine oxide, and benzyl and methylphenylglyoxy ester.

Examples of the intramolecular hydrogen abstraction type radical polymerization initiator include benzophenone-based initiators including benzophenone, methyl o-benzoyl benzoate, 4-phenylbenzophenone, 4,4'-dichlorobenzophenone, hydroxybenzophenone, 4-benzoyl-4'-methyl-diphenyl sulfide, acrylated benzophenone, 3,3',4,4'-tetra(t-butylperoxycarbonyl)benzophenone and 3,3'-dimethyl-4-methoxybenzophenone, thioxanthone-based initiators including 2-isopropylthioxanthone, 2,4-dimethylthioxanthone, 2,4-diethylthioxanthone and 2,4-dichlorothioxanthone, aminobenzophenone-based initiators including Michler's ketone and 4,4'-diethylaminobenzophenone, 10-butyl-2-chloroacridone, 2-ethylanthraquinone, 9,10-phenanthrenedione, and camphorquinone.

Examples of the cationic polymerization initiator include a photo-acid generator. Examples of the photo-acid generator include B(C₆F₅)₄⁻, PF₆⁻, AsF₆⁻, SbF₆⁻, and CF₃SO₃⁻ salts of aromatic onium compounds such as diazonium, ammonium, iodonium, sulfonium, and phosphonium, a sulfonated product that generates sulfonic acid, halide that generates hydrogen halide, and an iron arene complex.

The content of the polymerization initiator can be arbitrarily set as long as the white ink is sufficiently cured by irradiation with actinic radiation and ejecting properties of the white ink are not deteriorated. For example, the content of the polymerization initiator is preferably 0.1wt% or more and 20wt% or less, more preferably 1.0wt% or more and 12wt% or less based on the total mass of the white ink.

### (Gelling agent)

The white ink may contain a gelling agent. The gelling agent is an organic substance that is a solid at ordinary temperature and can be formed into a liquid by heating to thereby allow the white ink to undergo sol-gel phase transition according to the variation in temperature.

The gelling agent is preferably crystallized in the ink at a temperature equal to or lower than the gelation temperature of the ink. The gelation temperature here refers to a temperature at which the viscosity of the ink is rapidly varied by phase transition of the ink from sol to gel during cooling of the ink formed into sol or liquefied by heating. Specifically, the gelation temperature can be determined as the gelation temperature of the ink, at which the viscosity is rapidly increased during cooling of the ink formed into sol or liquefied, with measuring of the viscosity by, for example, a rheometer MCR300 (manufactured by Anton Paar GmbH).

When the gelling agent is crystallized in the ink, the actinic radiation polymerizable compound may be surrounded in a three-dimensional space formed by the gelling agent crystallized in a plate shape (hereinafter, such a structure is referred to as "card house structure"). Formation of such a card house structure allows the actinic radiation polymerizable compound in the form of a liquid to be retained in the space, thereby allowing a dot formed by attachment of the ink to be further hardly wetted and spread, resulting in a more enhancement in pinning properties of the ink. Such an enhancement in pinning properties of the ink allows a dot formed by attachment of the ink to a recording medium to be hardly combined.

When the card house structure is formed by the gelling agent, the card house structure formed by the gelling agent also serves as a filter that suppresses movement of an unreacted photocurable compound, an unreacted photoinitiator, and/or a residue of a photoinitiator or the like, in the cured film of the ink. In other words, not only the network formed from the cured product of the above actinic radiation polymerizable compound, but also the filter formed from the gelling agent is formed in the cured film of the ink, thereby allowing movement of any component in the cured film to be further easily suppressed. Thus, the occurrence of odor can be suppressed even if any unreacted actinic radiation polymerizable compound remains in the compound.

When the gelling agent is contained in the white ink, a crystal of the gelling agent is precipitated on a surface of a white cured film formed after first light exposure described below. The crystal of the gelling agent precipitated typically has a certain length of a hydrocarbon chain, and thus is high in affinity with a hydrocarbon chain generated by polymerization and crosslinking of the actinic radiation polymerizable compound in the cured product of the gel ink. After the gel ink is cured, a crystal of the gelling agent included in the gel ink is precipitated at the interface with the white cured film in the cured product of the gel ink, and the crystal of the gelling agent precipitated on the surface of the white cured film is also high in affinity with the crystal of the gelling agent precipitated from the cured product of the gel ink. Thus, the gelling agent can generate interaction between the cured product of the gel ink and the white cured film, resulting in a more enhancement in adhesiveness between the cured product of the gel ink and the white cured film.

Examples of the gelling agent include an aliphatic ketone compound; an aliphatic ester compound; petroleum-based wax such as paraffin wax, microcrystalline wax and petrolatum; vegetable wax such as candelilla wax, carnauba wax, rice wax, Japan wax, jojoba wax, jojoba solid wax and jojoba ester; animal wax such as beeswax, lanolin and whale wax; mineral wax such as montan wax and hydrogenated wax; hardened castor oil or a hardened castor oil derivative; modified wax such as a montan wax derivative, a paraffin wax derivative, a microcrystalline wax derivative or a polyethylene wax derivative; higher fatty acids such as behenic acid, arachidic acid, stearic acid, palmitic acid, myristic acid, lauric acid, oleic acid and erucic acid; higher alcohols such as stearyl alcohol and behenyl alcohol; hydroxystearic acids such as 12-hydroxystearic acid; a 12-hydroxystearic acid derivative; fatty acid amides (for example, Nikka Amide series (manufactured by Nihon Kasei Co., Ltd.), ITOWAX series (manufactured by Itoh Oil Chemicals Co., Ltd.), and FATTYAMID series (manufactured by Kao Corporation)) such as lauric acid amide, stearic acid amide, behenic acid amide, oleic acid amide, erucic acid amide, ricinoleic acid amide and 12-hydroxystearic acid amide; N-substituted fatty acid amides such as N-stearylstearic acid amide and N-oleylpalmitic acid amide; special fatty acid amides such as N,N'-ethylenebisstearylamide, N,N'-ethylenebis-12-hydroxystearylamide and N,N'-xylylene bisstearylamide; higher amine such as dodecylamine, tetradecylamine or octadecylamine; fatty acid ester compounds (for example, EMALLEX series (manufactured by Nihon Emulsion Co., Ltd.), Rikemal series (manufactured by Riken Vitamin Co., Ltd.) and Poem series (manufactured by Riken Vitamin Co., Ltd.)) such as stearyl stearate, oleyl palmitate, glycerin fatty acid ester, sorbitan fatty acid ester, propylene glycol fatty acid ester, ethylene glycol fatty acid ester and polyoxyethylene fatty acid ester; sucrose fatty acid esters (Ryoto Sugar Ester Series; manufactured by Mitsubishi-Chemical Foods Corporation) such as sucrose stearate and sucrose palmitate; synthetic wax (UNILIN series and the like, manufactured by Baker Petrolite Corporation) such as polyethylene wax and α-olefin/maleic anhydride copolymer wax; dimer acid; dimer diol (PRIPOR series and the like, manufactured by CRODA); fatty acid inulin such as inulin stearate; fatty acid dextrin (Rheopearl series and the like, manufactured by Chiba Flour Milling Co., Ltd.) such as dextrin palmitate and dextrin myristate; glyceryl behenate/eicosadioate; polyglyceryl behenate/eicosadioate (Nomcort series and the like, manufactured by Nisshin Oillio Group, Ltd.); amide compounds (available from Ajinomoto Fine-Techno Co., Ltd.) such as N-lauroyl-L-glutamic acid dibutylamide and N-(2-ethylhexanoyl)-L-glutamic acid dibutylamide; dibenzylidene sorbitols such as 1,3:2,4-bis-O-benzylidene-D-glucitol (Gelol D, available from New Japan Chemical Co., Ltd.); and low molecular weight oil gelling agents described in Japanese Patent Application Laid-Open No. 2005-126507, Japanese Patent Application Laid-Open No. 2005-255821 and Japanese Patent Application Laid-Open No. 2010-111790.

The gelling agent preferably includes a linear alkyl group having 12 or more and 25 or less carbon atoms in its molecular structure, and the above "card house structure" is easily formed. The gelling agent may have a branched chain in its molecular structure.

Specific examples of the gelling agent including a linear alkyl group having 12 or more and 25 or less carbon atoms include an aliphatic ketone compound, an aliphatic ester compound, a higher fatty acid, a higher alcohol and a fatty acid amide each having a linear alkyl group having 12 or more and 25 or less carbon atoms.

Examples of the aliphatic ester having a linear alkyl group having 12 or more and 25 or less carbon atoms include behenyl behenate (number of carbon atoms: 21-22), icosyl icosanoate (number of carbon atoms: 19-20), behenyl stearate (number of carbon atoms: 17-21), stearyl stearate (number of carbon atoms: 17-18), palmityl stearate (number of carbon atoms: 17-16), lauryl stearate (number of carbon atoms: 17-12), cetyl palmitate (number of carbon atoms: 15-16), stearyl palmitate (number of carbon atoms: 15-18), myristyl myristate (number of carbon atoms: 13-14), cetyl myristate (number of carbon atoms: 13-16), octyldodecyl myristate (number of carbon atoms: 13-20), stearyl oleate (number of carbon atoms: 17-18), stearyl erucate (number of carbon atoms: 21-18), stearyl linoleate (number of carbon atoms: 17-18), behenyl oleate (number of carbon atoms: 18-22) and arachidyl linoleate (number of carbon atoms: 17-20). The number of carbon atoms in parentheses represents the number of carbon atoms in each of two hydrocarbon groups divided by an ester group.

Examples of the aliphatic ketone having a linear alkyl group having 12 or more and 25 or less carbon atoms include dilignoceryl ketone (number of carbon atoms: 23-23), dibehenyl ketone (number of carbon atoms: 21-21), distearyl ketone (number of carbon atoms: 17-17), dieicosyl ketone (number of carbon atoms: 19-19), dipalmityl ketone (number of carbon atoms: 15-15), dimyristyl ketone (number of carbon atoms: 13-13), lauryl myristyl ketone (number of carbon atoms: 11-14), lauryl palmityl ketone (11-16), myristyl palmityl ketone (13-16), myristyl stearyl ketone (13-18), myristyl behenyl ketone (13-22), palmityl stearyl ketone (15-18), palmityl behenyl ketone (15-22) and stearyl behenyl ketone (17-22). The number of carbon atoms in parentheses represents the number of carbon atoms in each of two hydrocarbon groups divided by a carbonyl group.

The content of the gelling agent is preferably 0.01wt% or more and 10.0wt% or less based on the total mass of the white ink, more preferably 0.01wt% or more and 5.0wt% or less, further preferably 0.01wt% or more and 2.0wt% or less based on the total mass of the white ink. The content of the gelling agent is in the above range, thereby enabling favorable adhesiveness between a white cured film formed from the white ink and an actinic radiation curable ink attached to the white cured film, described below, to be imparted.

### (Surfactant)

The white ink may contain a surfactant.

The surfactant can adjust surface tension of the ink to adjust wettability of the ink after attachment to the substrate of the ink and/or suppress combining of neighboring droplets.

Examples of the surfactant include a silicon-based surfactant, an acetylene glycol-based surfactant, and a fluorine-based surfactant having a perfluoroalkenyl group.

The content of the surfactant is preferably 0.001wt% or more and 10wt% or less, more preferably 0.001wt% or more and 1.0wt% or less based on the total mass of the white ink.

### (Polymerization inhibitor)

The white ink may contain a polymerization inhibitor.

Examples of the polymerization inhibitor include (alkyl)phenol, hydroquinone, catechol, resorcin, p-methoxyphenol, t-butylcatechol, t-butylhydroquinone, pyrogallol, 1,1-picrylhydrazyl, phenothiazine, p-benzoquinone, nitrosobenzene, 2,5-di-t-butyl-p-benzoquinone, dithiobenzoyl disulfide, picric acid, cupferron, aluminum N-nitrosophenylhydroxylamine, tri-p-nitrophenylmethyl, N-(3 -oxyanilino-1,3 -dimethylbutylidene)aniline oxide, dibutylcresol, cyclohexanone oxime cresol, guaiacol, o-isopropylphenol, butyraldehyde oxime, methylethylketoxime and cyclohexanone oxime.

### (Other component(s))

The white ink may further include, if necessary, other component(s). Such other component(s) may be any of various additives, other resins, and the like. Examples of such an additive include a surfactant, a leveling additive, a matting agent, an infrared absorber, an antimicrobial agent, and a basic compound for an enhancement in storage stability of the ink. Examples of the basic compound include a basic alkali metal compound, a basic alkali earth metal compound, and a basic organic compound such as amine. Examples of such other resin include resins for adjustment of physical properties of the cured film, such as a polyester-based resin, a polyurethane-based resin, a vinyl resin, an acrylic resin and a rubber-based resin.

The white ink may be an ink set by a combination thereof with an actinic radiation curable ink described below. A color ink for use in the ink set is not particularly limited, and a proper ink can be selected depending on an objective image.

### [Physical properties of ink]

As described above, the white ink may include the gelling agent. In such a case, the white ink can reversibly undergo sol-gel phase transition depending on the temperature. In general, a sol-gel phase transition-type actinic radiation curable ink is in the form of sol at a high temperature (for example, about 80°C) and thus can be ejected through an inkjet head, and such an ink is attached to a recording medium and thereafter naturally cooled to undergo gelation. Thus, combining of neighboring dots can be suppressed to allow for an enhancement in image quality.

When the white ink includes the gelling agent, the viscosity of the ink at a high temperature is preferably a certain value or less for an enhancement in injectability of the white ink. Specifically, the viscosity of the ink at 80°C is preferably 3 to 20 mPa•s, more preferably 6.0 to 15.0 mPa•s, further preferably 7.0 to 12.0 mPa•s. On the other hand, the viscosity of the ink at ordinary temperature, after attachment, is preferably a certain value or more for suppression of combining of neighboring dots. Specifically, the viscosity of the white ink at 25°C is preferably 1000 mPa•s or more.

When the white ink includes the gelling agent, the gelation temperature is preferably 40°C or more and 70°C or less, more preferably 50°C or more and 65°C or less. When the injection temperature is around 80°C, the gelation temperature of the ink is more than 70°C to cause gelation to easily occur in injection, resulting in deterioration in injectability. On the other hand, the gelation temperature is less than 40°C not to allow any rapid gelation to occur after attachment to a recording medium. The gelation temperature means a temperature at which the ink undergoes gelation to result in a reduction in fluidity during cooling of the ink in the form of sol.

The viscosity at 80°C, the viscosity at 25°C and the gelation temperature of the white ink can be determined by measuring the change of dynamic viscoelastic modulus of the ink depending on the temperature, with a rheometer. Specifically, the temperature change curve of the viscosity is obtained when the ink is heated to 100°C and cooled to 25°C under conditions of a shear rate of 11.7 (1/s) and a rate of temperature drop of 0.1°C/s. The viscosity at 80°C and the viscosity at 25°C can be determined by reading the viscosities at 80°C and 25°C, respectively, in the temperature change curve of the viscosity. The gelation temperature can be determined as a temperature at which the viscosity is 200 mPa•s in the temperature change curve of the viscosity.

The rheometer that can be here used is a stress control-type rheometer (PhysicaMCR series) manufactured by Anton Paar GmbH. The diameter of a cone plate can be 75 mm and the cone angle can be 1.0°.

### (Recording medium)

Examples of the recording medium include absorbable media including coated paper and uncoated paper, such as art paper, coated paper, light-weight coated paper, finely coated paper, cast paper, cardboard, and vapor-deposited paper on which a vapor-deposited film of a metal such as aluminum is deposited, non-absorbable recording media including plastics such as polyester, polyvinyl chloride, polyethylene, polyurethane, polypropylene, an acrylic resin, poly carbonate, polystyrene, an acrylonitrile-butadiene-styrene copolymer, polyethylene terephthalate and polybutadiene terephthalate (plastic substrate), and non-absorbable inorganic recording media such as metals and glass. The recording medium can be appropriately selected depending on the intended use.

The speed of conveyance of the recording medium is not particularly limited, and can be set, for example, from 1 to 120 m/s. The higher the speed of conveyance is, the higher the speed of formation of an image is.

### [Preparation of white ink]

The white ink can be prepared by mixing the above white pigment, actinic radiation polymerizable compound and polymerization initiator, and other each component under heating. The white ink may here contain the gelling agent. The resulting mixed liquid is preferably filtered by a predetermined filter. Here, a dispersion including the white pigment and the surfactant may be prepared in advance and the remaining components may be added thereto and mixed with heating.

### [First formation of image by use of white ink containing gelling agent]

The first formation of an image in the present invention involves ejecting an actinic radiation curable white inkjet ink containing an actinic radiation polymerizable compound and a white pigment through an inkjet head to attach the ink to a recording medium, thereby forming a white image. Hereinafter, such first formation of an image in the case of use of a white ink containing a gelling agent will be described.

In order to enhance ejecting properties of the white ink in (a) ejection of an actinic radiation curable white inkjet ink through an inkjet head for attachment of the ink onto a recording medium, the temperature of the white ink in the inkjet head is set to a temperature higher than the gelation temperature of the ink by 10 to 30°C, and thus ejecting properties of an ink droplet can be enhanced. The temperature of the white ink in the inkjet head is set to a temperature higher than the gelation temperature by 10°C or more, and thus the ink is inhibited from undergoing gelation in the inkjet head or on a nozzle surface to easily stabilize ejection of an ink droplet. On the other hand, the temperature of the white ink in the inkjet head is not set to a temperature higher than the gelation temperature by more than 30°C, and thus any ink component can be prevented from being degraded due to an increase in temperature of the ink. The ink can be heated by an inkjet head of an image forming apparatus, an ink flow path connected to the inkjet head, an ink tank connected to the ink flow path, and/or the like.

The temperature of the recording medium in attachment of a droplet of the ink is preferably set to a temperature lower than the gelation temperature of the ink by 10 to 20°C. If the temperature of the recording medium is too low, a droplet of the ink is caused to excessively and rapidly undergo gelation and pinning. On the other hand, if the temperature of the recording medium is too high, a droplet of the ink may hardly undergo gelation to cause neighboring droplets to be mutually mixed in some cases. The temperature of the recording medium can be appropriately adjusted to thereby allow a proper degree of leveling, not causing any mixing of neighboring droplets, and proper pinning to be simultaneously satisfied.

The amount of one droplet ejected through a nozzle of the inkjet head is preferably in the range from 0.5 to 10 pL depending on the resolution of an image, and is more preferably in the range from 0.5 to 2.5 pL for formation of a highly fine image. In order to form a highly fine image by such an amount of a droplet, it is necessary not to combine ink droplets after attachment to the recording medium, namely, it is necessary to allow the ink to sufficiently undergo sol-gel phase transition. Sol-gel phase transition is rapidly performed in the white ink. Accordingly, a highly fine image can be stably formed even by such an amount of a droplet.

A droplet of the ink, attached to the recording medium, is cooled and rapidly undergoes gelation by sol-gel phase transition. Thus, such a droplet of the ink can undergo pinning without being diffused. In addition, oxygen hardly enters the droplet of the ink and thus hardly inhibits curing of the actinic radiation polymerizable compound.

The white ink is preferably attached so that the total thickness of the droplet of the ink after curing is in the range from 1 to 20 µm. The "total thickness of the droplet of the ink" means the maximum value of the thickness of the white cured film obtained by curing the white ink drawn on the recording medium.

The amount of attachment of the white ink is preferably in the range from 0.6 to 1.6 g/m² in terms of titanium oxide from the viewpoint that an enhancement in hiding properties, an enhancement in curability and suppression of curling are realized.

The first formation of an image may be performed by any of a single-pass system and a scanning system, and a single-pass system can be adopted to thereby increase the speed of formation of an image.

### [First light exposure]

The first light exposure in the present invention is performed after the first formation of an image. The first light exposure involves irradiating the white ink attached to the surface of the recording medium, the surface undergoing the first formation of an image, (a front surface of the recording medium) with actinic radiation to cure the white ink attached to the surface of the recording medium, the surface undergoing the first formation of an image, thereby forming a white cured film.

The curing rate of the white cured film (hereinafter, also simply referred to as "white cured film") obtained by curing the white ink in the first light exposure is preferably 70% or more, more preferably 85% or more and less than 100%, particularly preferably more than 95% and less than 100%. The curing rate of the white cured film is 85% or more, thereby enabling the remaining amount of an unreacted actinic radiation polymerizable compound included in the white ink to be reduced and thus enabling odor generated from the white cured film to be reduced.

The curing rate of the ink here represents the conversion of the photocurable compound in the ink composition. The curing rate of the white ink can be determined by the ratio of the amount of an actinic radiation polymerizable functional group (for example, a vinyl group) included in the white cured film immediately before ejection of a color ink to the amount of the actinic radiation polymerizable functional group included in the white ink. The amount of the actinic radiation polymerizable functional group can be here measured by use of an infrared spectrophotometer capable of carrying out a real-time measurement (NEXUS470; manufactured by Thermo Fisher Scientific).

The maximum indentation depth for the surface of the white cured film, according to a nano-indentation method (according to ISO14577-1) at a maximum load of 2 mN, is preferably less than 1000 nm, more preferably 0 nm or more and less than 1000 nm, particularly preferably 0 nm or more and less than 800 nm. When the maximum indentation depth for the surface of the white cured film, according to a nano-indentation method at a maximum load of 2 mN, is 1000 nm, folding crack of an image obtained after a final step can be suppressed.

The actinic radiation with which the white ink attached to the surface of the recording medium is irradiated is preferably ultraviolet light from an ultraviolet LED. Examples of a general light source of ultraviolet light include a metal halide lamp, and an ultraviolet LED can be adopted as a light source, to thereby suppress melting of the ink due to heat of radiation of the light source, namely, the occurrence of curing failure on the surface of the cured film of the ink. In addition, as the wavelength is shorter, absorption by titanium oxide is higher in the wavelength range of 400 nm or less. Accordingly, the peak wavelength of an ultraviolet LED is preferably in the range from 385 to 400 nm from the viewpoint of proper curing of the ink. Examples of a light source having an ultraviolet LED include a water-cooled ultraviolet light irradiation unit (peak wavelength: 395 nm) manufactured by Phoseon Technology.

The conditions in irradiation with the actinic radiation can be appropriately set depending on the composition of the ink, and the like. For example, the light source having an ultraviolet LED is preferably disposed so that the maximum illuminance on the surface of the white ink attached to the surface of the recording medium is 0.5 to 10.0 W/cm², more preferably 1.0 to 5.0 W/cm². Herein, the thickness of the white ink is in an ignorable range with respect to irradiation with the actinic radiation, and thus the maximum illuminance on the surface of the white ink attached to the surface of the recording medium may be adjusted by adjustment of the maximum illuminance on the surface of the recording medium.

When the white ink is irradiated with the actinic radiation, the accumulated amount of light with which the white ink on the recording medium is irradiated is preferably 500 mJ/cm² or less in order to prevent light scattering due to a titanium oxide particle included in the white ink, because light scattering due to such a titanium oxide particle causes curing to be promoted.

When the surface of the white ink is irradiated with the actinic radiation, such irradiation may be performed at a lower oxygen concentration than a usual oxygen concentration. The oxygen concentration in such irradiation with the actinic radiation is preferably less than 21volume%, more preferably 0.1volume% or more and 10volume% or less, further preferably 0.1volume% or more and 8.0volume% or less, particularly preferably 0.1volume% or more and 5.0volume% or less. Such irradiation with the actinic radiation at a low oxygen concentration can cause no inhibition of curing by oxygen, thereby allowing curing to rapidly progress to thereby provide an image having a desired hardness.

The speed of conveyance of the recording medium is not particularly limited. The speed of conveyance of the recording medium can be the same as the speed in the first formation of an image, thereby allowing efficient printing to be made. The speed of conveyance can be set, for example, from 1 to 120 m/sec.

### [Second formation of image]

The second formation of an image in the present invention is performed after the first light exposure. The second formation of an image includes ejecting an actinic radiation curable ink containing an actinic radiation polymerizable compound and a gelling agent (hereinafter, also simply referred to as "gel ink") through an inkjet head to attach the ink onto the white cured film formed on a surface of a recording medium, thereby forming an image. The gel ink for use in the second formation of an image is preferably an ink that can be ejected by inkjet as in the white ink for use in the first formation of an image, from the viewpoint of easiness of the formation of an image. The gelling agent can be contained to thereby provide an ink that can undergo sol-gel phase transition, and thus the formation of an image can be easily performed.

### (Colorant)

The gel ink preferably includes a colorant. The colorant includes a pigment and a dye. The colorant is preferably a pigment from the viewpoint that dispersion stability of the gel ink is more enhanced and an image high in weather resistance is formed.

Examples of the pigment include the following organic pigments and inorganic pigments described in the Color Index.

Examples of a red or magenta pigment include Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, 257, Pigment Violet 3, 19, 23, 29, 30, 37, 50 and 88, and Pigment Orange 13, 16, 20 and 36.

Examples of a blue or cyan pigment include Pigment Blue 1, 15, 15:1, 15:2, 15:3, 15:4, 15:6, 16, 17-1, 22, 27, 28, 29, 36 and 60.

Examples of a green pigment include Pigment Green 7, 26, 36 and 50.

Examples of a yellow pigment include Pigment Yellow 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185 and 193.

Examples of a black pigment include Pigment Black 7, 26 and 28.

Examples of the dye include various oil-soluble dyes.

The content of the pigment or dye is preferably 1wt% or more and 30wt% or less, more preferably 2wt% or more and 20wt% or less based on the total mass of the gel ink. The content of the pigment or dye is 2wt% or more based on the total mass of the gel ink, thereby allowing the resulting image to be sufficiently colored. The content of the pigment or dye is 20wt% or less based on the total mass of the gel ink, thereby allowing the viscosity of the ink not to be so enhanced.

### (Actinic radiation polymerizable compound)

The gel ink includes an actinic radiation polymerizable compound as in the white ink for use in the first formation of an image. The actinic radiation polymerizable compound that can be used in the second formation of an image is the same compound as the compound exemplified as the actinic radiation polymerizable compound that can be contained in the white ink for use in the first formation of an image.

### (Polymerization initiator)

The polymerization initiator that can be included in the gel ink in the second formation of an image is the same compound as the compound exemplified as the polymerization initiator that can be included in the white ink for use in the first formation of an image.

### (Gelling agent)

The gel ink includes a gelling agent. The gelling agent that can be used in the second formation of an image is the same compound as the compound exemplified as the gelling agent that can be contained in the white ink for use in the first formation of an image.

The content of the gelling agent is preferably 0.01wt% or more and 7.0wt% or less based on the total mass of the gel ink, and is more preferably 0.01wt% or more and 3.0wt% or less based on the total mass of the color ink.

As described above, other actinic radiation curable ink is applied with being in contact with the surface of other white cured film, thereby causing such other actinic radiation curable ink to be repelled on the surface of other white cured film, resulting in deterioration in adhesiveness of an image. On the contrary, the actinic radiation curable ink contains the gelling agent, thereby allowing a crystal of the gelling agent to be precipitated at the interface with the white cured film in the cured product of the gel ink. The crystal of the gelling agent precipitated typically has a certain length of a hydrocarbon chain, and thus is high in affinity with a hydrocarbon chain generated by polymerization and crosslinking of the actinic radiation polymerizable compound in the white cured film. Thus, the gelling agent can generate interaction between the cured product of the gel ink and the white cured film, resulting in an enhancement in adhesiveness between the cured product of the gel ink and the white cured film. Thus, even when the curing rate of the white cured film is more enhanced to reduce its odor, adhesiveness between the white cured film and the cured film formed thereon can be enhanced.

The gelling agent can be contained to thereby thicken the gel ink applied to the surface of the white cured film. It is considered that such thickening of the gel ink, in the case of attachment of the ink on the white cured film, can also inhibit the gel ink from being repelled on the surface of such a film to result in an enhancement in adhesiveness between the white cured film and the cured film formed thereon.

### (Surfactant)

The gel ink for use in the second formation of an image may contain a surfactant. The surfactant that can be used in the second formation of an image is the same compound as the compound exemplified as the surfactant that can be contained in the white ink for use in the first formation of an image.

### (Polymerization inhibitor)

The gel ink for use in the second formation of an image may contain a polymerization inhibitor. The polymerization inhibitor that can be used in the second formation of an image is the same compound as the compound exemplified as the polymerization inhibitor that can be contained in the white ink for use in the first formation of an image.

### (Preparation of gel ink)

The gel ink can be prepared by mixing the above actinic radiation polymerizable compound and gelling agent, and any each component under heating. The resulting mixed liquid is preferably filtered by a predetermined filter. When the gel ink includes a pigment, a dispersion including the pigment and a dispersant may be prepared in advance and the remaining components may be added thereto and mixed with heating.

### [Physical properties of gel ink]

The gel ink includes the gelling agent, and thus can reversibly undergo sol-gel phase transition depending on the temperature. The gel ink is in the form of sol at a high temperature (for example, about 80°C) and thus can be ejected through an inkjet head, and the gel ink is attached to the recording medium and thereafter naturally cooled to undergo gelation.

The viscosity of the gel ink is preferably in the range from 1 × 10° to 1 × 10³ Pas●s at a temperature of the recording medium, at which the gel ink is attached to the recording medium. The viscosity of the gel ink is 1 × 10° or more, thereby enabling combining of neighboring droplets to be suppressed after attachment to the recording medium. The viscosity of the gel ink is 1 × 10³ or less, thereby enabling a droplet to be properly wetted and spread on the substrate and thus enabling a highly fine image having no streak feeling to be obtained. The viscosity of the gel ink can be measured with a rheometer. The rheometer that can be here used is a stress control-type rheometer (PhyMCR series) manufactured by Anton Paar GmbH. The diameter of a cone plate can be 75 mm and the cone angle can be 1.0°.

### [Second formation of image]

In the second formation of an image, an image is formed by attaching the gel ink to the white cured film formed on the recording medium through the first formation of an image and the first light exposure, according to an inkjet system. The white cured film is here overcoated with the gel ink so that a part of or all the white cured film obtained by curing the white ink is covered.

When a droplet of the gel ink is ejected through an inkjet head of an image forming apparatus, the temperature of the gel ink in the inkjet head is set to a temperature higher than the gelation temperature of the ink by 10 to 30°C, and thus ejecting properties of a droplet of the gel ink can be enhanced. The temperature of the gel ink in the inkjet head is set to a temperature higher than the gelation temperature by 10°C or more, and thus the gel ink is inhibited from undergoing gelation in the inkjet head or on a nozzle surface to easily stabilize ejection of a droplet of the gel ink. On the other hand, the temperature of the gel ink in the inkjet head is not set to a temperature higher than the gelation temperature by more than 30°C, and thus any ink component can be prevented from being degraded due to an increase in temperature of the gel ink. The gel ink can be heated by the inkjet head of an image forming apparatus, an ink flow path connected to the inkjet head, an ink tank connected to the ink flow path, and/or the like.

The temperature of the recording medium in attachment of a droplet of the gel ink (or the temperature of the surface of the white cured film) is preferably set to a temperature lower than the gelation temperature of the gel ink by 10 to 20°C. If the temperature of the recording medium is too low, a droplet of the gel ink is caused to excessively and rapidly undergo gelation and pinning. On the other hand, if the temperature of the recording medium is too high, a droplet of the gel ink may hardly undergo gelation to cause neighboring droplets to be mutually mixed in some cases. The temperature of the recording medium can be appropriately adjusted to thereby allow a proper degree of leveling, not causing any mixing of neighboring droplets, and proper pinning to be simultaneously satisfied.

The amount of one droplet ejected through each nozzle of the inkjet head is preferably in the range from 0.5 to 10 pL depending on the resolution of an image, and is more preferably in the range from 0.5 to 2.5 pL for formation of a highly fine image. In order to form a highly fine image by such an amount of a droplet, it is necessary not to combine droplets of the gel ink after attachment to the white cured film, namely, it is necessary to allow the gel ink to sufficiently undergo sol-gel phase transition. Sol-gel phase transition is rapidly performed in the gel ink. Accordingly, a highly fine image can be stably formed even by such an amount of a droplet.

A droplet of the gel ink, attached to the white cured film, is cooled and rapidly undergoes gelation by sol-gel phase transition. Thus, such a droplet of the ink can undergo pinning without being diffused. In addition, oxygen hardly enters the droplet of the gel ink and thus hardly inhibits curing of the actinic radiation polymerizable compound.

The gel ink is preferably attached so that the total thickness of the droplet of the ink after curing is in the range from 5 to 25 µm. The "total thickness of the total droplet of the ink" means the maximum value of the thickness of one including the white cured film formed on the recording medium and the cured film of the gel ink, formed on the white cured film.

The second formation of an image may be performed by any of a single-pass system and a scanning system, as in the first formation of an image, and a single-pass system can be adopted to thereby increase the speed of formation of an image.

The speed of conveyance of the recording medium is not particularly limited, and can be set to, for example, from 1 to 120 m/s. The higher the speed of conveyance is, the higher the speed of formation of an image is.

### [Second light exposure]

The second light exposure is performed after the second formation of an image. In the second light exposure, an unreacted the gel ink attached to the white cured film formed on a surface of the recording medium, the surface undergoing the formation of an image, is irradiated with actinic radiation including light in the wavelength range from 350 to 410 nm, thereby completely curing the gel ink on the white cured film. The gel ink is completely cured by the light exposure. Such irradiation with actinic radiation at a low oxygen concentration can here cause no inhibition of curing by oxygen, thereby allowing curing to rapidly progress to thereby provide an image having a desired hardness.

The respective inks are cured at two-stage light exposure as in the first light exposure and the second light exposure, and thus folding crack of an image formed can be suppressed, unlike when formation of an image is performed by simultaneous curing of an actinic radiation curable ink and an actinic radiation curable white ink by collective light exposure. On the contrary, if a white ink and other actinic radiation curable ink are tried to be simultaneously cured by collective light exposure, actinic radiation incident into the white ink is reflected and scattered by titanium oxide to thereby cause an actinic radiation polymerizable compound to be excessively polymerized and crosslinked, resulting in excessive curing of the white ink. On the contrary, it is considered that two-stage light exposure can be performed to thereby cure the white ink to such an extent that no folding crack occurs in the first light exposure, and thus folding crack of an image formed can be suppressed.

The occurrence of folding crack due to collective light exposure is remarkably observed even when the white ink includes the gelling agent. The reason is considered because the gelling agent which is hydrophobic is repelled to hydrophilic titanium oxide in the white ink and easily precipitated on the surface of the white ink, and the gelling agent precipitated excessively inhibits oxygen from penetrating into the white ink, thereby hardly causing oxygen inhibition.

The occurrence of folding crack due to collective light exposure is remarkably observed also when vapor-deposited paper obtained by depositing a vapor-deposited film of a metal such as aluminum is used as the recording medium. The reason is considered because actinic radiation reflected on the surface of the vapor-deposited paper again penetrates into the white ink to excessively polymerize and crosslink the actinic radiation polymerizable compound.

Furthermore, the occurrence of folding crack due to collective light exposure is remarkably observed, for example, also when an image is formed in a low-oxygen atmosphere. The reason is considered because penetration of oxygen into the white ink is limited to hardly cause oxygen inhibition.

Also in such cases, it is considered that two-stage light exposure can be performed to thereby cure the white ink to such an extent that no folding crack occurs in the first light exposure, and thus folding crack of an image formed can be suppressed.

### [Image forming apparatus]

FIG. 1 illustrates a schematic view illustrating an exemplary configuration of inkjet image forming apparatus 100 (hereinafter, also simply referred to as "image forming apparatus") according to an embodiment of the present invention. As illustrated in FIG. 1, image forming apparatus 100 includes inkjet head 110a for white ink and inkjet head 110b for gel ink (hereinafter, also simply referred to as "inkjet heads 110a and 110b"), conveyance path 120, actinic radiation irradiation section 130a that irradiates the white ink with actinic radiation and actinic radiation irradiation section 130b that irradiates the gel ink with actinic radiation (hereinafter, also simply referred to as "actinic radiation irradiation sections 130a and 130b"), temperature control section 140, and oxygen concentration adjusting section 150a that adjusts the oxygen concentration in irradiation of the white ink with actinic radiation and oxygen concentration adjusting section 150b that adjusts the oxygen concentration in irradiation of the gel ink with actinic radiation (hereinafter, also simply referred to as "oxygen concentration adjusting sections 150a and 150b"). In FIG. 1, arrow A indicates the conveyance direction of recording medium 160. Inkjet head 110a, oxygen concentration adjusting section 150a, actinic radiation irradiation section 130a, inkjet head 110b, oxygen concentration adjusting section 150b and actinic radiation irradiation section 130b are disposed in the listed order from the upstream to the downstream of the conveyance direction of the recording medium, with being in contact with conveyance path 120.

Image forming apparatus 100 according to an embodiment of the present invention is an image forming apparatus that forms an image by use of the above actinic radiation curable ink.

When attachment and fixation of the white ink and attachment and fixation of the gel ink are performed by a single image forming apparatus, image forming apparatus 100 configured as illustrated in FIG. 1 can be used. An image forming apparatus of an actinic radiation curable inkjet system is categorized to such an apparatus of a line recording system (single-pass recording system) and such an apparatus of a serial recording system. Any of such systems may be selected depending on the required resolution of an image and the required recording speed, and a line recording system (single-pass recording system) is preferable from the viewpoint of high-speed recording.

Specifically, image forming apparatus 100 in the present invention is an image forming apparatus including an ink ejection section that ejects the gel ink heated to 40 to 120°C, through inkjet heads 110a and 110b, conveyance path 120 that conveys recording medium 160 to which the actinic radiation curable ink ejected is to be attached, to thereby attach the ink to a surface of recording medium 160 having a surface temperature of 60°C or less, actinic radiation irradiation sections 130a and 130b that irradiate the white ink or the gel ink attached, with actinic radiation, temperature control section 140 that allows the recording medium to be kept at predetermined temperature, and oxygen concentration adjusting sections 150a and 150b that adjust the oxygen concentration in irradiation with actinic radiation.

As illustrated in FIG. 1, image forming apparatus 100 further includes head carriage 170a that accommodates inkjet head 110a for actinic radiation curable white ink and head carriage 170b that accommodates a plurality of inkjet heads 110b for actinic radiation curable ink (hereinafter, also simply referred to as "head carriages 170a and 170b"), ink flow path 180a connected to head carriage 170a, ink tank 190a that stores the white ink which is to be fed through ink flow path 180a, ink flow path 180b connected to head carriage 170b, and ink tank 190b that stores the ink which is to be fed through ink flow path 180b.

Head carriage 170a accommodates inkjet head 110a and head carriage 170b accommodates inkjet head 110b. Head carriage 170b includes respective inkjet heads for the colors of yellow (Y), magenta (M), cyan (C) and black (K). Head carriages 170a and 170b are, for example, secured and disposed so that the entire width of recording medium 160 is covered.

The white ink is fed from ink tank 190a to inkjet head 110a and the gel ink is fed from ink tank 190b to inkjet head 110b.

The numbers of inkjet heads 110a and 110b disposed in conveyance direction A of recording medium 160 are set depending on the nozzle densities of inkjet heads 110a and 110b, respectively, and the resolution of a printed image. For example, when an image having a resolution of 1440 dpi is formed by use of inkjet heads 110a and 110b each having an amount of an droplet of 2 pl and a nozzle density of 360 dpi, four inkjet heads 110a and four inkjet heads 110b may be displaced and disposed in conveyance direction A of recording medium 160. Alternatively, when an image having a resolution of 720 × 720 dpi is formed by use of inkjet heads 110a and 110b each having an amount of an droplet of 6 pl and a nozzle density of 360 dpi, two inkjet heads 110a and two inkjet heads 110b may be displaced and disposed. The "dpi" represents the number of ink droplets (dots) per inch (2.54 cm).

Ink tank 190a is connected to head carriage 170a via ink flow path 180a, and ink tank 190b is connected to head carriage 170b via ink flow path 180b. Ink flow path 180a is a path that feeds the ink in ink tank 190a to head carriage 170a, and ink flow path 180b is a path that feeds the ink in ink tank 190b to head carriage 170b. It is preferable for stable ejection of an ink droplet to maintain a gel state with heating each ink in ink tanks 190a and 190b, ink flow paths 180a and 180b, head carriages 170a and 170b, and inkjet heads 110a and 110b at predetermined temperatures.

Actinic radiation irradiation sections 130a and 130b, with the entire width of recording medium 160 being covered therewith, are disposed downstream of head carriages 170a and 170b, respectively, in conveyance direction A of recording medium 160. Actinic radiation irradiation sections 130a and 130b irradiate ink droplets ejected through inkjet heads 110a and 110b, respectively, and attached to recording medium 160, with light.

Temperature control section 140 is disposed on the lower surface of recording medium 160, and allows recording medium 160 to be kept at a predetermined temperature. Temperature control section 140 may be divided to, for example, a section closer to head carriage 170a and a section closer to head carriage 170b, as illustrated in FIG. 1. Temperature control section 140 can be, for example, any of various heaters and the like.

Hereinafter, an image forming method using image forming apparatus 100 will be described. As illustrated in FIG 1, recording medium 160 is conveyed between head carriage 170a and temperature control section 140 of image forming apparatus 100, in image forming apparatus 100. On the other hand, recording medium 160 is adjusted so as to be at a predetermined temperature by temperature control section 140. Next, an ink droplet of the white ink at a high temperature is ejected through inkjet head 110a of head carriage 170a to recording medium 160, and attached to recording medium 160. Thereafter, the ink droplet of the white ink attached to recording medium 160 is irradiated with light by actinic radiation irradiation section 130a, and thus cured.

Furthermore, an ink droplet at a high temperature is ejected through inkjet head 110b of head carriage for gel ink 170b, and attached to recording medium 160. Thereafter, the ink droplet of the gel ink attached to recording medium 160 is irradiated with light by actinic radiation irradiation section 130b, and thus cured.

Image forming apparatus 100 may include oxygen concentration adjusting section 150 that adjusts the oxygen concentration in irradiation with actinic radiation. Oxygen concentration adjusting sections 150a and 150b adjust the oxygen concentrations of atmospheres surrounding surfaces where the ink is attached to recording medium 160, in irradiation with actinic radiation by irradiation sections 130a and 130b, respectively.

Oxygen concentration adjusting sections 150a and 150b can include exhaust pipes 151a and 151b, respectively, connected to external exhaust apparatuses and the like, the pipes being capable of suctioning and exhausting any gas in the vicinity of the surface of the recording medium, and feed pipes 152a and 152b, respectively, connected to a generator of any gas low in oxygen concentration, such as a nitrogen gas generator, and disposed downstream of exhaust pipe 151, the pipes being capable of feeding any gas low in oxygen concentration to the vicinity of the surface of the recording medium. The amounts of exhaust from exhaust pipes 151a and 151b and the amounts of gas-feeding from feed pipes 152a and 152b can be adjusted to thereby adjust the oxygen concentrations in the atmospheres to desired values of less than 21%, respectively. While a configuration where exhaust pipe 151a and feed pipe 152a are continued and exhaust pipe 151b and feed pipe 152b are continued is adopted in FIG. 1, a configuration where each of the exhaust pipes and each of the feed pipes are apart from each other may be adopted as long as adjustment of the oxygen concentrations can be made. Feed pipes 152a and 152b are preferably located near irradiation sections 130a and 130b and may be provided with being continued to irradiation sections 130a and 130b, respectively.

Oxygen concentration adjusting sections 150a and 150b may not include exhaust pipe 151a or 151b, but only feed pipe 152a or 152b, as long as the oxygen concentrations in the atmospheres can be adjusted to desired values of less than 21%.

### Examples

Hereinafter, the present invention will be more specifically described with reference to the following examinations, but the present invention is not limited to the following examinations.

### [Preparation of inkjet ink]

### (Preparation of pigment dispersion product)

### (Dispersion product 1 (white))

A stainless steel beaker was charged with 52wt% of tripropylene glycol diacrylate (Miramer M200: manufactured by Miwon Specialty Chemical, "Miramer" being a registered trademark of the Company) and 8wt% of a dispersant (BYKJET-9151: manufactured by BYK Additives & Instruments, "BYKJET" being a registered trademark of the Company), and the resultant was stirred with heating on a hot plate at 65°C for 1 hour.

After the resulting liquid was cooled to room temperature, 40wt% of titanium oxide (TCR-52; manufactured by Sakai Chemical Industry Co., Ltd.) was added as a pigment. A mixed liquid, together with 220 g of zirconia beads each having a diameter of 0.5 mm, was placed in a glass bottle, the glass bottle was tightly plugged, and the resultant was subjected to a dispersion treatment in a paint shaker for 5 hours. The zirconia beads were removed from a dispersion, thereby providing white (W) dispersion product 1.

### (Dispersion product 2 (yellow))

The same manner as in white (W) dispersion product 1 was performed except that the pigment was changed to Pigment Yellow 180 (Chromofine Yellow 6280JC; manufactured by Dainichiseika Color & Chemicals Mfg. Co., Ltd.) and the amount of the pigment added was changed to 15wt%, thereby providing yellow (Y) dispersion product 2.

### (Dispersion product 3 (magenta))

The same manner as in white (W) dispersion product 1 was performed except that the pigment was changed to Pigment Red 122 (Chromofine Red 6112JC; manufactured by Dainichiseika Color & Chemicals Mfg. Co., Ltd.) and the amount of the pigment added was changed to 15wt%, thereby providing magenta (M) dispersion product 3.

### (Dispersion product 4 (cyan))

The same manner as in white (W) dispersion product 1 was performed except that the pigment was changed to Pigment Blue 15: 4 (Chromofine Blue 6332JC; manufactured by Dainichiseika Color & Chemicals Mfg. Co., Ltd.) and the amount of the pigment added was changed to 20wt%, thereby providing cyan (C) dispersion product 4.

### (Dispersion product 5 (black))

The same manner as in white (W) dispersion product 1 was performed except that the pigment was changed to Pigment Black 7 (#52; manufactured by Mitsubishi Chemical Corporation) and the amount of the pigment added was changed to 20wt%, thereby providing black (K) dispersion product 5.

### [Preparation of ink]

The gelling agent, the actinic radiation polymerizable compound, the photopolymerization initiator and each of dispersion products 1 to 5 were mixed at any composition (unit: wt%) shown in Tables 1 to 3, and the mixture was stirred in the state of being heated at 80°C. The mixed liquid in the state of being heated was filtered by use of a 3-µm membrane filter (manufactured by Toyo Roshi Kaisha, Ltd.) made of Teflon (registered trademark), thereby providing each of gelling agent-containing inks (white inks) B to D and ink set A (see Table 2), and each of gelling agent-free inks (gel inks) A, E and F and ink set B (see Table 3).

The gelling agent used was any of behenyl behenate (M-2222SL; manufactured by NOF Corporation), stearyl stearate (M-9676; manufactured by NOF Corporation) and cetyl myristate (Spermaceti; manufactured by NOF Corporation).

The actinic radiation polymerizable compound used was any of polyethylene glycol #400 diacrylate, polyethylene glycol #600 diacrylate, tripropylene glycol diacrylate, 9EO-modified trimethylolpropane triacrylate, 3EO-modified trimethylolpropane triacrylate, polyester acrylate oligomer (CN2273; manufactured by Sartomer), N-vinylcaprolactam and 2-(2-vinyloxyethoxy)ethyl acrylate.

The surfactant used was Polyether-modified polydimethylsiloxane (BYK307; manufactured by BYK Additives & Instruments), the photopolymerization initiator used was bis(2,4,6-trimethylbenzoyl)-phenylphosphine oxide (DC1819; manufactured by Double Bond Chemical Ind., Co., Ltd.), and the polymerization inhibitor used was 4,4'-[(1,10-dioxo-1,10-decanediyl)bis(oxy)]bis[2,2,6,6-tetramethyl]-1-piperidinyloxy (Irgastab UV-10; manufactured by BYK Additives & Instruments, "Irgastab" being a registered trademark of the Company).

**[Table 1]**

| Ink No. | | A | B | C | D | E | F |
|---|---|---|---|---|---|---|---|
| Dispersion product 1 | White | 25.0 | 25.0 | 25.0 | 25.0 | 25.0 | 25.0 |
| Actinic radiation polymerizable compound | PEG400DA | 10.0 | 10.0 | 10.0 | 10.0 | | |
| | PEG600DA | 10.0 | 10.0 | 10.0 | 10.0 | | |
| | TPGDA | 10.0 | 10.0 | 10.0 | 10.0 | 19.8 | 19.8 |
| | TMP(EO)9TA | 13.8 | 13.6 | 13.2 | 12.8 | | |
| | TMP(PO)3TA | 20.0 | 20.0 | 20.0 | 20.0 | | |
| | CN2273 | 8.0 | 8.0 | 8.0 | 8.0 | | |
| | NVC | | | | | 50 | |
| | VEEA | | | | | | 50 |
| Photopolymerization initiator | DC1819 | 3.0 | 3.0 | 3.0 | 3.0 | 5.0 | 5.0 |
| Surfactant | BYK307 | 0.05 | 0.05 | 0.05 | 0.05 | 0.05 | 0.05 |
| Polymerization inhibitor | UV-10 | 0.15 | 0.15 | 0.15 | 0.15 | 0.15 | 0.15 |
| Gelling agent | M-2222SL | | | | 0.2 | | |
| | M-9676 | | | 0.2 | 0.4 | | |
| | Spermaceti | | 0.2 | 0.4 | 0.4 | | |

**[Table 2]**

| <Ink set A> | | | | | |
|---|---|---|---|---|---|
| Dispersion product 2 | Yellow | 12.0 | | | |
| Dispersion product 3 | Magenta | | 24.0 | | |
| Dispersion product 4 | Cyan | | | 13.5 | |
| Dispersion product 5 | Black | | | | 12.5 |
| Actinic radiation polymerizable compound | PEG400DA | 10.0 | 10.0 | 10.0 | 10.0 |
| | PEG600DA | 10.0 | 10.0 | 10.0 | 10.0 |
| | TPGDA | 15.0 | 15.0 | 15.0 | 15.0 |
| | TMP(EO)9TA | 19.8 | 5.8 | 16.3 | 19.3 |
| | TMP(PO)3TA | 25.0 | 25.0 | 25.0 | 25.0 |
| | CN2273 | 5.0 | 8.0 | 8.0 | 5.0 |
| Photopolymerization initiator | DC1819 | 3.0 | 2.0 | 2.0 | 3.0 |
| Surfactant | BYK307 | 0.05 | 0.05 | 0.05 | 0.05 |
| Polymerization inhibitor | UV-10 | 0.15 | 0.15 | 0.15 | 0.15 |
| Gelling agent | M-2222SL | 0.5 | 0.5 | 0.5 | 0.5 |
| | M-9676 | 0.4 | 0.4 | 0.4 | 0.4 |
| | Spermaceti | 0.4 | 0.4 | 0.4 | 0.4 |

**[Table 3]**

| <Ink set B> | | | | | |
|---|---|---|---|---|---|
| Dispersion product 2 | Yellow | 12.0 | | | |
| Dispersion product 3 | Magenta | | 24.0 | | |
| Dispersion product 4 | Cyan | | | 13.5 | |
| Dispersion product 5 | Black | | | | 12.5 |
| Actinic radiation polymerizable compound | PEG400DA | 10.0 | 10.0 | 10.0 | 10.0 |
| | PEG600DA | 10.0 | 10.0 | 10.0 | 10.0 |
| | TPGDA | 15.0 | 15.0 | 15.0 | 15.0 |
| | TMP(EO)9TA | 19.8 | 5.8 | 16.3 | 19.3 |
| | TMP(PO)3TA | 25.0 | 25.0 | 25.0 | 25.0 |
| | CN2273 | 5.0 | 8.0 | 8.0 | 5.0 |
| Photopolymerization initiator | DC1819 | 3.0 | 2.0 | 2.0 | 3.0 |
| Surfactant | BYK307 | 0.05 | 0.05 | 0.05 | 0.05 |
| Polymerization inhibitor | UV-10 | 0.15 | 0.15 | 0.15 | 0.15 |
| Gelling agent | M-2222SL | | | | |
| | M-9676 | | | | |
| | Spermaceti | | | | |

| | | | | | |
|---|---|---|---|---|---|
| Abbreviations of the actinic radiation polymerizable compounds shown in Tables 1 to 3 are as follows. PEG400DA: polyethylene glycol #400 diacrylate PEG600DA: polyethylene glycol #600 diacrylate TPGDA: tripropylene glycol diacrylate TMP(EO)9TA: 9EO-modified trimethylolpropane triacrylate TMP(EO)3TA: 3EO-modified trimethylolpropane triacrylate CN2273: polyester acrylate oligomer NVC: N-vinylcaprolactam VEEA: 2-(2-vinyloxyethoxy)ethyl acrylate | | | | | |

### [Image evaluation]

### (Image forming method for image evaluation)

Gelling agent-containing inks (B to D, and ink set A) or gelling agent-free inks (A, E and F, and ink set B) were each packed in an image forming apparatus (see FIG. 1) of a line system including each inkjet recording head (2 pL and 1440 dpi with respect to each color) equipped with a piezo type inkjet nozzle. An ink supply system included an ink tank, an ink flow path, a sub ink tank immediately before such each inkjet recording head, a piping equipped with a filter, and a piezo head, and was warmed so that the ink temperature was 80°C. A conveyance table of a substrate was warmed so that the temperature was 40°C.

### [Curing rate and surface hardness]

The substrate prepared was a roll of sheet A (A-PET sheet "Novaclear", manufactured by Mitsubishi Chemical Corporation, "Novaclear" being a registered trademark of J-Film Corporation) having a width of 5 cm, a length of 20 cm and a thickness of 30 µm. A white 100% solid image (hereinafter, also simply referred to as "white cured film") (resolution: 1440 × 1440 dpi) having a size of 16 cm × 4 cm was formed on the substrate in a coating mass of 10 g/m² by use of a white ink. The conditions of irradiation of the white ink with ultraviolet light were changed for adjustment so that the following curing rate and surface hardness were achieved.

### (Curing rate)

The curing rate of the ink represents the conversion of the photocurable compound in the ink composition. The curing rate of the white ink was here determined by the ratio of the amount of a vinyl group included in the white cured film immediately before ejection of a color ink to the amount of a vinyl group included in the white ink. The amount of the vinyl group was here measured by use of an infrared spectrophotometer capable of carrying out a real-time measurement (NEXUS470; manufactured by Thermo Fisher Scientific).

### (Evaluation criteria)

The evaluation criteria of the curing rate of the white ink are as follows.
A: the curing rate was 90% or more
B: the curing rate was 80% or more and less than 90%
C: the curing rate was 70% or more and less than 80%
D: the curing rate was less than 70%

### (Surface hardness)

The surface hardness of the white cured film formed using each of white inks A to F according to the above method was evaluated as a maximum indentation depth according to a nano-indentation method at a maximum load of 2 mN. The nano-indentation method was here a testing method involving pushing an indenter to a sample surface at a minute load, continuously measuring the amount of displacement of the indenter by a high-precision displacement sensor, and analyzing the resulting load-displacement curve to thereby determine indentation hardness, indentation elastic modulus, and the like.

The surface hardness of the white cured film was measured by the method according to ISO14577-1. The measurement apparatus and the measurement conditions are as follows.

### (Measurement apparatus)

Apparatus: Nanoindentation tester ENT-1000 (manufactured by Elionix Inc.)
Load: 2 mN

### (Evaluation criteria)

A: the maximum indentation depth was less than 800 nm
B: the maximum indentation depth was 800 nm or more and less than 1000 nm
C: the maximum indentation depth was 1000 nm or more and less than 1200 nm
D: the maximum indentation depth was 1200 nm or more

### (Oxygen concentration)

An exhaust pipe suctioning and exhausting any gas in the vicinity of the surface of the recording medium and a feed pipe feeding a nitrogen gas to the vicinity of the surface of the recording medium were disposed immediately before each irradiation of the gelling agent-containing inks and the gelling agent-free inks ejected with ultraviolet light, and the oxygen concentration in each irradiation of the gelling agent-containing inks and the gelling agent-free inks with ultraviolet light was adjusted to each value described in Table 4.

### [Evaluation of odor, adhesiveness and folding crack]

The white ink on the substrate was irradiated with ultraviolet light and cured within 5 seconds after ejection of the white ink to the recording medium. Specifically, the white ink was ejected to each of the recording media of sheet B and sheet C, and thereafter the ink was cured or temporarily cured by irradiation with light from two water-cooled ultraviolet light irradiation units GL-150C (manufactured by Hamamatsu Photonics K.K.) disposed downstream, thereby forming a white cured film (radiation illuminance: 5 W/cm²). Next, cyan, magenta and yellow inks were used to thereby produce an image having an image on which such inks of 3 colors of cyan, magenta and yellow were each laid in a coating mass of 8 g/m², for 10 sheets, so that the entire surface of the white cured film was covered.

The two ultraviolet light irradiation units each included an ultraviolet LED (peak wavelength: 385 nm) as a light source, and were disposed on a front surface of the substrate (the surface undergoing formation of an image) so that irradiation with ultraviolet light could be made immediately after formation of the white cured film by the white ink and immediately after formation of each color image by the color inks.

### (Evaluation method of odor)

An image produced by the image forming method for image evaluation was stored in a glass bottle, and subjected to sensory evaluation where the residual odor in the bottle was smelt by 20 panelists after a lapse of one day.

### (Evaluation criteria)

AA: 0 panelists felt unpleasant odor
A: 1 to 2 panelists felt unpleasant odor
B: 3 to 5 panelists felt unpleasant odor
C: 6 to 9 panelists felt unpleasant odor
D: 10 or more panelists felt unpleasant odor

### (Evaluation method of adhesiveness)

### (Evaluation method)

The sheet for use in the image forming method for image evaluation was changed to sheet B (Pasco F (black); manufactured by Hokuetsu Corporation) and sheet C (aluminum vapor-deposited paper; manufactured by Oji F-Tex Co., Ltd.), the white ink in a coating mass of 10 g/m² was attached to each of the sheets to form a white cured film, and each ink of 4 colors of cyan, magenta, yellow and black was ejected onto the white cured film so that the coating mass was 8 g/m², thereby producing a color image. After the image produced was left to still stand in an environment of 25°C and 60% RH for 24 hours, cuts forming 100 squares were created thereon, and a Scotch super transparent tape S (manufactured by 3M, "Scotch" being a registered trademark of the Company) was pasted thereto and slowly peeled therefrom.

### (Evaluation criteria)

A: No peeling was observed
B: Peeling was observed in 1 square or more and less than 3 squares
C: Peeling was observed in 3 squares or more and less than 5 squares
D: Peeling was observed in 5 squares or more

### (Evaluation method of folding crack)

The white ink was attached in a coating mass of 10 g/m² to each of sheets of sheet B and sheet C to form a white cured film, and thereafter each ink of 4 colors of cyan, magenta, yellow and black was ejected onto the white cured film so that the total coating mass was 12 g/m², thereby producing a color image. After the image produced was left to still stand in an environment of 25°C and 60% RH for 24 hours, the image was folded in two (mountain fold) and a Scotch super transparent tape S was pasted to and slowly peeled from a portion folded.

### (Evaluation criteria)

A: No peeling was observed at the interface between the white cured film and the color image
B: Slight peeling was observed at the interface between the white cured film and the color image, but had no problem
C: Peeling was observed at the interface between the white cured film and the color image, but had no problem
D: Significant peeling was observed at the interface between the white cured film and the color image

The evaluation results thereof are shown in Table 4.

**[Table 4]**

| Image No. | White ink | Ink set | Oxygen concentration | Curing rate | Hardness | Odor | Adhesion | | Folding crack | |
|---|---|---|---|---|---|---|---|---|---|---|
| | | | | | | Sheet A | Sheet B | Sheet C | Sheet B | Sheet C |
| 1 | A | A | 21 | D | D | C | C | C | B | B |
| 2 | A | A | 21 | C | C | C | B | B | B | B |
| 3 | A | A | 21 | B | B | B | B | B | B | B |
| 4 | A | A | 21 | B | A | B | B | B | B | B |
| 5 | A | A | 21 | A | A | A | B | B | B | B |
| 6 | E | A | 21 | B | A | B | C | B | B | B |
| 7 | E | A | 21 | A | A | B | B | B | B | C |
| 8 | F | A | 21 | B | A | B | C | B | B | B |
| 9 | F | A | 21 | A | A | B | B | B | B | C |
| 10 | B | A | 21 | B | B | B | B | A | B | B |
| 11 | C | A | 21 | B | B | B | A | A | B | A |
| 12 | D | A | 21 | B | B | A | A | A | A | A |
| 13 | A | A | 10 | B | B | A | A | A | A | A |
| 14 | B | A | 10 | A | A | AA | A | A | A | A |
| 15 | B | B | 21 | B | B | B | C | C | B | C |
| 16 | A | A | 21 | Not evaluated | Not evaluated | A | B | B | C | D |
| 17 | A | B | 21 | C | B | C | D | D | B | C |
| 18 | A | B | 21 | B | B | B | D | D | B | C |

The curing rate of the white ink attached to the recording medium in the first formation of an image was 70% or more in irradiation with actinic radiation after the first formation of an image, thereby enabling odor generated from the remaining actinic radiation polymerizable compound included in the white image to be reduced. The reason is considered because the polyfunctional monomer and the monofunctional monomer each serving as the actinic radiation polymerizable compound can be mixed in the ink to thereby allow the polyfunctional monomer to impart a reduction in interspace derived from the monofunctional radical polymerizable compound, the interspace being generated in a network hydrocarbon chain generated by polymerization and crosslinking of the radical polymerizable compound, thereby resulting in a more reduction in odor which passed through the interspace and which was generated from the cured film. The reason is also considered because the content of the monofunctional radical polymerizable compound allows an unreacted actinic radiation polymerizable compound to hardly pass through the interspace and thus allows odor to be hardly generated from the cured film.

In particular, when the oxygen concentration was decreased to 10% in the first light exposure, such odor could be best reduced. The reason is considered because irradiation with actinic radiation at a low oxygen concentration causes no inhibition of curing by oxygen, to thereby allow curing to rapidly progress.

When the gelling agent-containing color ink was subjected to overcoat printing on each of the gelling agent-free white inks such as inks 1 to 9, 13, an image having favorable adhesiveness could be obtained. The reason is considered because not only repelling is suppressed by a sticking mechanism due to phase transition of the gelling agent contained in the color ink, but also the gelling agent which is hydrophobic is precipitated on the surface of the color ink, thereby allowing interaction at the interface with the white cured film to act to result in an enhancement in affinity.

Each of the gelling agent-containing white inks described as inks 10 to 12 and the gelling agent-containing color ink could be used to provide an image more enhanced in adhesiveness. The reason is considered because such an enhancement is due to affinity between such gelling agents.

It was found in comparison of inks 10 to 12 with ink 14 that the oxygen concentration in the first light exposure could be decreased to 10% or less to thereby suppress odor. The reason is considered because irradiation with actinic radiation at a low oxygen concentration causes no inhibition of curing by oxygen, to thereby allow curing to rapidly progress.

It is considered based on the results with respect to inks 1 to 13 that the maximum indentation depth for the surface of the white cured film which can be obtained through the first light exposure is less than 1000 nm to thereby allow flexibility to remain in the white cured film even after attachment and curing of the color ink on the white ink.

It was found in comparison of ink 3 with ink 15 that a combination of the gelling agent-free white ink and the gelling agent-containing color ink could more enhance adhesiveness to the sheet and more suppress folding crack. The reason is considered because not only repelling is suppressed by a sticking mechanism due to phase transition of the gelling agent contained in the color ink, but also the gelling agent which is hydrophobic is precipitated on the surface of the color ink, thereby allowing interaction at the interface with the white cured film to act to result in an enhancement in affinity.

As described above, an actinic radiation curable color ink including an actinic radiation curable white ink and a gelling agent can be used to thereby provide an image forming method that enables odor due to an unreacted actinic radiation polymerizable compound to be reduced in formation of an image by overcoat printing, that enables folding crack of an image formed to be suppressed and that enables an image excellent in adhesiveness to be formed. In addition, a gelling agent can also be included in an actinic radiation curable white ink to thereby allow an image more excellent in adhesiveness to be formed. Thus, a highly fine image favorable in aesthetic appearance properties can be formed even in overcoat printing.

### Industrial Applicability

The actinic radiation curable ink in the present invention enables an image forming method to be provided, in which the method enables odor due to an unreacted actinic radiation polymerizable compound to be reduced, enables folding crack of an image formed to be suppressed, and allows an image formed to be excellent in adhesiveness. Thus, the present invention is expected to allow applications of overcoat printing by an inkjet method to be extended, thereby contributing to progression and diffusion of the art in the field.

### Reference Signs List

100 Image forming apparatus
110a. 110b Inkjet head
120 Conveyance path
130a, 130b Actinic radiation irradiation section
140 Temperature control section
150a, 150b Oxygen concentration adjusting section
151a, 151b Exhaust pipe
152a, 152b Feed pipe
160 Recording medium
170a, 170b Head carriage
180a. 180b Ink flow path
190a, 190b Ink tank

Although embodiments of the present invention have been described and illustrated in detail, it is clearly understood that the same is by way of illustration and example only and not limitation, and the scope of the present invention should be interpreted by terms of the appended claims.

## Claims

1. An image forming method, comprising:
first formation of an image, the formation comprising ejecting an actinic radiation curable white inkjet ink comprising an actinic radiation polymerizable compound and a white pigment through a nozzle of an inkjet head to attach the ink to a surface of a recording medium;
first light exposure comprising irradiating the actinic radiation curable white inkjet ink attached to the surface of the recording medium with actinic radiation to cure or temporarily cure the actinic radiation curable white inkjet ink;
second formation of an image, the formation comprising ejecting an actinic radiation curable inkjet ink comprising an actinic radiation polymerizable compound and a gelling agent through a nozzle of an inkjet head to attach the ink to a surface of a white cured film obtained by curing of the actinic radiation curable white inkjet ink; and
second light exposure comprising irradiating the actinic radiation curable inkjet ink attached to the surface of the white cured film with actinic radiation to cure the actinic radiation curable inkjet ink.

2. The image forming method according to claim 1, wherein a curing rate of the white cured film is 70% or more.

3. The image forming method according to claim 1 or 2, wherein a maximum indentation depth for the surface of the white cured film, according to a nano-indentation method (according to ISO14577-1) at a maximum load of 2 mN, is less than 1000 nm.

4. The image forming method according to any one of claims 1 to 3, wherein the actinic radiation curable white inkjet ink comprises a gelling agent.

5. The image forming method according to any one of claims 1 to 4, wherein a content of a gelling agent comprised in the actinic radiation curable white inkjet ink is 0.01 to 2.0wt% based on a total mass of the actinic radiation curable white inkjet ink.

6. The image forming method according to any one of claims 1 to 5, wherein an oxygen concentration in irradiation of the actinic radiation curable white inkjet ink with actinic radiation in the first light exposure is 0.01volume% or more and 10volume% or less, or an oxygen concentration in irradiation of the actinic radiation curable white inkjet ink and the actinic radiation curable inkjet ink with actinic radiation in the second light exposure is 0.01volume% or more and 10volume% or less.
